# EUROPEAN PATENT SPECIFICATION

(11) **EP 4 311 999 B1**
(45) Date of publication and mention of the grant of the patent: **21.01.2026**
(21) Application number: 22187869.7
(22) Date of filing: 29.07.2022
(51) Int. Cl.: G01C 1/04, G06V 10/40, G06T 7/73, G01C 21/20, G01C 15/00, G01C 11/02, G06V 10/10, G06V 20/10

(54) **AUTOMATIC, REFERENCE-FREE PRECISE STATIONING OF A GEODETIC SURVEY INSTRUMENT BASED ON ENVIRONMENT INFORMATION**
AUTOMATISCHES, BEZUGSLOSES, GENAUES STATIONIEREN EINES GEODETISCHEN VERMESSUNGSINSTRUMENTS BASIEREND AUF UMGEBUNGSINFORMATIONEN
MISE EN PLACE PRÉCISE, SANS RÉFÉRENCE ET AUTOMATIQUE D'UN INSTRUMENT DE RELEVÉ GÉODÉSIQUE EN FONCTION D'INFORMATIONS ENVIRONNEMENTALES

(43) Date of publication of application: 31.01.2024
(73) Proprietor: Leica Geosystems AG, 9435 Heerbrugg (CH)
(72) Inventor: TÖRÖK, Zoltán, CH-9442 Berneck (CH); METZLER, Bernhard, A-6850 Dornbirn (AT); VAN DER ZWAN, Elmar, CH-9428 Walzenhausen (CH); STRITTMATTER, Holger, D-78465 Konstanz (DE)
(74) Representative: Kaminski Harmann

(56) References cited:
- US-A1- 2012 014 564
- US-A1- 2016 187 130
- US-A1- 2017 276 485
- US-A1- 2018 158 200
- US-A1- 2018 356 222
- US-A1- 2020 363 202

## Description

### FIELD OF THE INVENTION

The present invention relates to a geodetic survey instrument comprising a targeting unit, an imaging sensor and a computing unit. The geodetic survey instrument exhibits an automatic stationing functionality based on pre-existing natural or manmade objects as references. The present invention further relates to a stationing method of the survey instrument and a computer program product based on it.

### BACKGROUND OF THE INVENTION

To gain information from static or moving objects according to the geodetic accuracy standards, in particular with centimetre precision or better, geodetic survey instruments, in particular total stations, tachymeters and motorized theodolites, are commonly used. Such instruments are configured to provide spherical coordinates and/or derived Cartesian coordinates of a single point or a plurality of single points according to the geodetic accuracy standards.

Total stations are a common class of geodetic survey instruments. By the way of example total stations are presented from here on as a representative of a generic geodetic survey instrument. The specific features of other types of geodetic survey instruments might be applied accordingly. Total stations essentially comprise targeting elements, single point distance measuring elements, in particular laser rangefinders, and angle sensors, with accuracy in the range of angular seconds. From here on, a "targeting unit" is understood to be an ensemble that can sight, aim, and measure one or more individual point. The targeting unit might be a single, integrated component of the total station, in particular co-axial sighting and single point distance measuring elements, in particular laser rangefinders.

Contemporary total stations are typically characterized by a compact design comprising the targeting unit, computing, controlling and data storage units in a single portable device. The computing unit might comprise the controlling and data storage units. Total stations are often used in combination with a retroreflective target object in particular a circular prism, and for such applications total stations typically comprise an automatic target search and tracking function. Objects equipped with retroreflective targets are commonly known as cooperative targets, while other targets, in particular diffusely reflective targets, are commonly known as non-cooperative targets.

To sight and target a designated target point generic total stations are equipped with a telescopic sight such as optical telescope. The telescopic sight can be aligned with the target point by pivoting and tilting the total station. By way of example, such a sighting device is described in EP 2 219 011. The spherical coordinates of the target points are then determined. A distance of the targeted object is determined by a range finding method, in particular with a laser rangefinder, while elevation and azimuth angles might be derived from angle readings provided by the angle sensors comprised by the survey instrument, in particular comprised by the targeting unit. By the way of example, unless otherwise specified, distance from/to the survey instrument will mean distance from the targeting unit. By the way of example azimuth angle unless otherwise specified is an angle to a reference direction, in particular to the north direction, while the elevation angle is an angle to the horizon, in particular to a calibrated horizon.

Contemporary total stations can also reference the instrument to an external coordinate system by precisely recording the reference marks in the environment. Upon determining such an external coordinate system all coordinative operations may be referenced to this external or a global coordinate system. Typical total stations are also equipped with a GNSS receiver. However, without an appropriate support infrastructure, e.g. base stations at referenced positions, the accuracy of the GNSS receivers are not fulfilling the geodetic accuracy requirements. Thus, they can only provide a coarse position data.

Contemporary total stations may also be equipped with a set of wireless modules to communicate with different types of external units. A non-exclusive list of external units comprise other survey instruments, handheld data acquisition devices, field computers or cloud services. In particular total stations may receive a digital model of the environment using the wireless module. EP 3 779 359 discloses a survey instrument comprising an appropriate interface for receiving a digital model of the environment and a method of referencing the survey instrument to the digital model.

Referencing the total station is typically a cumbersome, manual work. At least a coarse position of the total station, this might be provided using a GNSS position, and the absolute position of the visible reference markers in the proximity has to be known. Ideally the reference markers are reference markers of the Geodetic Control Network. The absolute pose of the surveying instrument is then derived by targeting and marking the said reference markers. This is typically carried out by manual targeting or by scanning the environment to seek and target such reference markers. E.g. EP 2 404 137 discloses such a scanning method.

During a typical survey task, in particular in indoor survey or surveying a complex site e.g. a construction yard, targeting and measuring all the points to be surveyed is not possible from one referenced site. This necessitates the relocation of the surveying instrument. Moreover, the relocation of the instrument often takes place along random trajectories, especially in the case an of indoor survey. This means that the pose of the instrument must be determined on multiple occasions.

US 2016/187130 A1 discloses a method for precisely determining a position and orientation offset for a geodetic surveying device.

US 2020/363202 A1 discloses a fully automatic method for determining the current, geo-referenced position and alignment of a terrestrial surveying device with scan functionality at a current location based on a set of stored, geo-referenced three-dimensional (3D) scan panoramic images.

For many survey tasks, especially in urban or indoor surveying, even obtaining the coarse pose of the instrument is difficult, since e.g. GNSS signals might not be present at every desirable surveying locations. The prior art contains multiple methods of localizing the survey instrument under such conditions. E.g. DE 11 2006 003 390, US 2011/102255, EP 3 222 969 discloses localization approaches. These methods on the other hand involve the manual measurement of one or more reference point using a prism pole or an equivalent auxiliary tool.

Coarse positioning systems based on system intern sensors like inertial measurement unit (IMU), visual positioning system (VPS), or combined visual inertial system (VIS), are especially advantageous since they can provide at least a coarse pose information. The utilization of IMU-s to aid the coarse positioning of the instrument is known in the prior art, e.g. US 2019/086206 discloses a system incorporating an IMU. IMU-s on the other hand might drift even during a relatively short timeframe of less than an hour, i.e they have to be referenced regularly.

VPS provide a coarse pose of the system by analyzing the visual information of the surroundings of the instrument. The VPS might be based on structure from motion (SfM), simultaneous localization and mapping (SLAM) or any other alternative method. The application of VPS in combination with a geodetic survey instrument are known in the prior art e.g. EP 3 062 283 discloses such a system. Such systems can provide coarse positioning without external signals. On the other hand since they are based on the interpretation of visual data such systems are error-prone in an environment with ambiguous features, e.g. a construction yard with many close to identical looking features, or where the contrast is changing rapidly, e.g. during an indoor survey task.

A so-called visual inertial simultaneous localization and mapping (VISLAM) system is disclosed e.g. in EP 3 779 357, i.e. the combination of a SLAM system with an IMU to combine the aspects of the two method for the coarse positioning. EP 3 779 357 also discloses the referencing of the pose of the survey system to a digital data. The survey system disclosed in EP 3 779 357 is on the other hand based on the creation of a point cloud which is a quite tedious work.

A typical survey environment comprises prominent features, i.e. objects with well recognizable geometry or appearance. For an outdoor survey these might be e.g. electric masts, church spires, antennas, but even natural objects like a tall tree. Similar objects can be defined for indoor survey tasks, e.g. corners, power sockets etc. Some of the features might be georeferenced. Utilizing prominent features in the environment is known in the prior art e.g. US 9,958,269 discloses a method of deriving the pose of the survey instrument after relocation based on the pre-known or measured position of prominent features.

On one hand marking a large amount of features provides a safety margin, that at least a required minimum of features will be visible on the next site. On the other hand it increases the time required for stationing the survey instrument. Measuring only a few features might be tempting due to the reduced time on establishing the database. This could, however, lead to problem, that only a few features will be accessible from an otherwise desirable new survey location. Thus, the operator is forced to choose the accessible non-optimal features leading to a reduced accuracy or selecting a new survey site, which lead to a loss of time.

Providing a score of applicability for the features in the environment and a gross score of applicability regarding a readiness for relocation is therefore desirable for an efficient survey procedure. Determining from an image taken, a survey environment and a survey task which features will be likely useful could shorten the stationing process, while increase the robustness of it.

### OBJECT OF THE INVENTION

In view of the above circumstances, the object of the present invention is to provide a geodetic survey instrument comprising a targeting unit, an imaging sensor and a computing unit with a simplified and more efficient stationing.

A further object of the present invention is to provide an improved stationing in an unknown environment.

These objective are achieved by realizing the characterizing features of the independent claims. Features, which further develop the invention in an alternative or advantageous manner are described in the dependent patent claims.

### SUMMARY OF THE INVENTION

The invention relates to a geodetic survey instrument comprises a targeting unit, an imaging sensor and a computing unit. The geodetic survey instrument may be man-portable in that the instrument is not attached to a vehicle, in particular a UAV, or a car, at least during the measurements. Furthermore, while the instrument might be attached to a transport vehicle during the relocation, the primary mode of relocating the instrument might be being carried by the operator.

The targeting unit is configured to target an object in an environment and to provide a targeting data measurement of the targeted object. The targeting might be realized manually by direct operator action. The targeting might also be realized semi-automatically, i.e. the operator selects possible targets from a list of identified/expected targets. The targeting might be carried out in a fully automatic mode, wherein the computing unit identifies and targets one or more targets. By the way of example, unless otherwise specified, from here on the targeting process is illustrated using a fully automatic mode. Specific features of other targeting methods might be applied accordingly. Targeting data are targeting directions or coordinates. By the way of example coordinates are georeferenced absolute coordinates, fulfilling the geodetic accuracy standards, in particular centimeter accuracy or better.

The survey instrument might comprise a pose tracking unit configured to provide a tracking of coarse pose data of the instrument during movement of the instrument. The pose tracking unit might be permanently integrated into the survey instrument. The pose tracking unit might be temporarily attached or attachable to the survey instrument. The pose tracking unit might comprise a plurality of sensors. The present invention is not limited to embodiments, where the pose tracking unit is a single entity. Part of the sensors comprised by the pose tracking unit might be integrated to the survey instrument, while other sensors comprised by the pose tracking unit might be temporarily attached. The pose tracking unit might be configured to recognize a relocation of the instrument.

Coarse pose in the sense of the present invention is pose information not fulfilling the geodetic accuracy standards, in particular position data with decimeter accuracy or worse. Fine pose in the sense of the present invention is pose information according to geodetic accuracy standards. The fine pose might be referenced to an absolute reference system. The present invention is not limited to such cases and might be applicable to any arbitrary local reference system.

The optical axis of the imaging sensor is referenceable to a targeting direction of the targeting unit. The imaging sensor might provide true-angle photography, wherein the complete image is referenced to the targeting direction of the targeting unit. The imaging sensor might be an arrangement comprising a plurality of cameras. The image might be provided by rotating the survey instrument and stitching single images. The imaging sensor might provide a set of non-connected images containing angle information.

The imaging sensor might be configured for panoramic or full dome photography. The imaging sensor might be a wide-angle camera. In some embodiments the computing unit might discard a portion of the image containing no features. By the way of example, unless otherwise specified, from here the image is a contiguous full dome image. Specific features of other imaging methods might be applied accordingly.

The targeting unit, the pose tracking unit, and the imaging sensor are part of a functional and not structural definition of the components of the total station. In some embodiments the sighting unit of the targeting unit might also take the functional role of the imaging sensor. The imaging sensor might also act as the pose tracking unit via a VPS or SLAM functionality. The imaging sensor might utilize the motorized axes of the targeting unit to acquire a full dome image. These and other alternative arrangements are within the sense of the present invention.

The computing unit is configured to store the fine pose data of the instrument, in particular also the coarse pose data, to provide targeting commands for the targeting unit, to read the targeting data or coordinates provided by the targeting unit, to read image data from the imaging sensor, and in particular to read the coarse pose data from the pose tracking unit. The computing unit is a functional definition. The computing unit might be a single entity integrated or permanently attached to the total station. The computing unit might be temporarily attached. The computing unit might comprise a plurality of computing sub-units, in particular the imaging sensor might have one or more computing sub-units. The computing unit might comprise handheld components. These and other alternative arrangements are within the meaning of the present invention.

The geodetic survey instrument comprises an automatic stationing functionality, the automatic stationing functionality is configured for providing the automatic execution of the steps of 1.) acquiring an image of the environment by the imaging sensor in a first pose of the instrument, 2.) creating or updating a catalog of referencing features based on the image, and calculating for each referencing feature a score of applicability by the computing unit, wherein the score of applicability characterizes an identifiability and/or measurability of the features, 3.) selecting a first set of features comprising a plurality of the features from the catalog of referencing features fulfilling a selection criterion regarding at least the score of applicability, and in particular further regarding a spatial distribution of the features in the first set of features, by the computing unit, 4.) in a first pose of the instrument providing measurement data for a first set of targeting data regarding targeting directions of the features in the first set of features, 5.) providing the first set of targeting data and assigning the targeting directions in the first set of targeting data to the respective features of the first set of features, 6.) performing a relocation of the instrument, 7.) selecting a second set of features from the first set of features by the computing unit, the selection is based on the score of applicability for each of the features, 8.) in a second pose of the instrument providing measurement data for a second set of targeting data regarding targeting directions of the features of the second set of features, 9.) providing the second set of targeting data and assigning the targeting directions in the second set of targeting data to the respective features of the second set of features, wherein at least one of the first and the second set of targeting data further comprises data regarding distances of the features of the respective set of features from the survey instrument, 10.) determining a fine pose of the second pose relative to the first pose based on the first and second set of targeting data.

Identifiability characterizes at least a retrievability of the feature in images acquired from different locations by the imaging sensor and measurability characterizes whether the position of the feature can be measured according to the geodetic accuracy standards. The score of applicability might depend on the score of applicability of other features, in particular whether another features with high score of applicability have been identified with similar targeting data.

The geodetic survey instrument might provide a feedback based on the total number of the features in the first set of features, their spatial distribution and their score of applicability whether the instrument is ready for relocation.

The selection of the referencing features might be dependent on the environment and a survey task. The features might be natural, e.g. tall trees or rock formations or manmade, e.g. church spires, power masts. For an indoor survey task prominent features might be corners of the room, doorframes, power sockets, furniture elements, construction materials, screws or rivets. The referencing features might be visual features, e.g. characterized by a specific shape, contrast, or pattern. The referencing features might be geometric features e.g. characterized by a specific size, in particular flat surfaces with cylindrical, rectangular or triangular shape. The person skilled in the art can provide a similar or alternative list depending on the environment and the survey task.

The referencing features might be provided by a previous survey task and/or previous steps in the same survey task, in particular manual measurements performed by the operator. The operator might manually add or remove features to the catalog of referencing features. The absolute coordinates of the referencing features might be known from other sources, in particular from a database, or from a design data of the environment.

The relocation of the instrument might be carried out along an essentially random path. The relocation might follow a 3D path, e.g. part of the relocation path might be along a stairway. The relocation path might contain a pause or an oscillatory phase, e.g. when the operator stops to open a door. The present invention does not place any limit on the possible relocation paths.

The present invention is in no way limited to the cases wherein the targeting of the features of the first or second set of features are executed utilizing the targeting unit. On the contrary, for survey instruments wherein the imaging sensor fulfil the geodetic accuracy requirements the imagining sensor might provide at least a part of the first and/or the second set of targeting data. The present invention is neither limited to the cases wherein the first set of targeting data is provided and assigned to the first set features in the first pose. On the contrary, the measurement data, in particular wherein the measurement data is an image, might be evaluated later, in particular in the second pose or off-line after finishing the survey task.

While the second set of features comprises a plurality of features from the first set of features, the present invention is not limited to the cases where measuring the first set of targeting data is precedent to measuring the second set of targeting data. The second set of features might be selected in the first pose of the instrument. The targeting data comprised by the second set of targeting data might be measured before selecting the second set of features. It goes without saying that neither the first nor the second pose corresponds to a time series of measurements. The instrument is relocated between the first pose and the second pose. The instrument might be relocated via an intermediate pose. All of these paths are possible according to the present invention.

The imaging sensor might be configured to provide image patches from the image wherein the image patches respectively comprise at least one referencing feature from the first or the second set of referencing features. The image patches might be assigned to the respective referencing features. The instrument might be configured to derive targeting data based on the image patches, in particular relative targeting directions by comparing the patches assigned to the same referencing feature as seen from the first and second pose.

In some embodiments the survey instrument further comprises 1.) a base unit, 2.) a support unit mounted on the base and configured to be rotatable relative to the base by a motorized axis, and 3.) a first angle sensor configured to measure a rotation angle of the support unit. The targeting unit is mounted on the support unit and is tiltable around a motorized tilting axis, wherein the instrument comprises a second angle sensor configured to measure the tilting angle of the targeting unit. The targeting unit comprises a beam exit of a distance measuring beam of a distance meter, in particular of a laser distance meter. The measuring beam of the distance meter defining the targeting direction. The coordinates of the targeted reference marker might be derived from the distance measured by the distance meter and the rotation and tilting angles.

In some embodiments the survey instrument further comprise a pose tracking unit, configured to provide a tracking of coarse pose data of the instrument at least during movement of the instrument. In such embodiments the automatic stationing functionality might further comprise providing the tracking of the coarse pose data by the pose tracking unit and the selection a second set of features from the first set of features might be further based on the tracking of the coarse pose data. The pose tracking unit might be configured to automatically recognize a relocation of the instrument.

Embodiments wherein a tracking of coarse pose data being provided are especially beneficial since the targeting unit might automatically target the features based on the coarse pose data. The targeting unit might comprise a sighting unit. The field of view of the sighting unit might allow the sighting and targeting the features in the second set of features without further target searching step. This enables an especially time efficient stationing of the instrument. Nevertheless the present invention is not limited to cases wherein the features in the second set of features are sighted without any searching step. On the contrary, applying the present invention might be beneficial by providing at least a shortened searching step owing to the estimated direction of the features in the second set of features relative to the coarse pose of the instrument.

In some embodiments at least one sensor of the pose tracking unit is located in the base. Locating the sensor in the base is especially beneficial, since the base is a stable, inert position. Such embodiments might allow the determination of the drift of the sensor. Furthermore being located at the base, might allow a recalibration of the sensor. In spite of the above benefits the present invention is not limited to embodiments where the sensor is located in the base.

In some embodiments the pose tracking unit comprises at least one of 1.) VPS, 2.) an IMU, 3.) a GNSS receiver, 4.) a WLAN positioning system, 5.) a cellular network based positioning system, 6.) a Bluetooth positioning system, and 7.) a VISLAM.

In some embodiments the pose tracking unit comprises the VPS and/or the VISLAM system. The VPS and/or the VISLAM being based on the images provided by the imaging sensor. The pose tracking unit and the imaging sensor, in the sense of the present invention are functional and not structural definitions. Utilizing the same module both as VPS and as imaging sensor is possible according to the present invention. Alternatively the pose tracking unit and the imaging sensor might share part of their components.

In some embodiments the VPS is configured to provide a feature tracking data for a plurality of tracked features comprised by the first set of features. The survey instrument might be configured to provide a request for stationing based on the feature tracking data, in particular when one or more tracked features are lost. Such embodiments are especially advantageous in combination with a fast stationing method, wherein no target search step is necessary. A further advantage of these embodiments is that the catalog of referencing features might be updated after stationing the instrument.

In some embodiment the imaging sensor is arranged and configured for use in the sighting unit of the targeting unit for aligning the targeting direction onto a target to be measured. An advantage of this approach would be that no further dedicated imaging sensors are required. Furthermore, since the sighting unit is co-axial with the distance meter the images acquired by the sighting unit comprise no angle offset or backlash. In some embodiments at least a portion of the first and/or the second set of targeting data is provided by the imaging sensor

Alternatively the survey instrument might utilize a dedicated imaging sensor. This approach might provide more flexibility, in particular in taking the image without rotating and/or tilting the survey instrument. For true angle cameras at least a portion of the first and/or the second set of targeting data might be provided by the imaging sensor. The present invention is not limited to any specific realization of the imaging sensor.

In some embodiments the automatic stationing functionality further comprises 1.) deriving a gross score of applicability based on scores of applicability of the features of the first set of features, and 2.) providing feedback to the operator on a readiness for relocation based on the gross score of applicability. The gross score of applicability might depend on the total number of features. The gross score of applicability might depend on the score of applicability of the individual features. The gross score of applicability might depend on the distribution of the features, in particular the direction from the survey instrument. The feedback might be that geodetic survey instrument is ready for relocation. The feedback might be that number of features is the first set of features is too low. The feedback might be that the score of applicability of the features in the first set of features is too low. The feedback might be a request for manually targeting one or more possible referencing features for the catalog of referencing features.

In some embodiments the survey instrument provides an assessment on the readiness for relocation based on the gross score of applicability upon receiving an operator request. The survey instrument might provide a feedback that the gross score of applicability is too low. The survey instrument might update the catalog of referencing features and the first set of features by automatically selecting new referencing features and providing and assigning the respective targeting data. An algorithm might be utilized to automatically identify additional features with a high score of applicability from the image captured in the first pose. The identified features might be added to the catalog of referencing features and/or the first set of features. The first set of targeting data might be updated with the targeting data of the newly identified features first set of features, in particular, the targeting unit is automatically aligned to the feature and a distance measurement is performed. The selection of features with a high score of applicability might be based on machine learning, in particular based on deep learning, where a machine trained algorithm is applied to the image.

In some embodiments a tracking gross score of applicability is derived based on the tracking of the coarse pose data and the score of applicability for each of the features in the first set of features. The survey instrument might be configured to provide a request for stationing based on the tracking gross score of applicability. Needless to say that the tracking of the gross score of applicability might be combinable with the tracking of individual features.

In some embodiments the computing unit is configured to receive a digital model of the environment. The digital model comprises one of 1.) a map of the environment, 2.) a design data of the environment, and 3.) a previous targeting data measurement data on the environment. The previous targeting data measurement data on the environment might have been measured by a further survey instrument. The computing unit might be further configured to reference the fine pose and/or the coarse pose of the survey instrument to the digital model.

The appropriate digital model might depend on the survey task and the environment. For an outdoor survey a map of the environment comprising navigational data and/or a list of landmarks and their coordinates might be optimal. For an indoor survey a building information model (BIM) or a computer aided design (CAD) of the environment might be optimal.

The design data might comprise a list of prominent features and their coordinates. The computing unit might refer to the information in the design data in the calculation of the score of applicability. The computing unit might recognize the type of environment and the survey task based on the received design data. The computing unit might export the type of environment and the survey task when exports the surveying task data.

In some embodiments the computing unit is configured to reference the position of the features in the catalog of referencing features to the digital model. Referencing according to the present invention might be merging the absolute position of the features with the coordinate system of the design data. Alternatively, referencing might be matching a list of landmarks and their coordinates from the design data and at least a part of the first set of targeting data of the first set of features. The computing unit might correct the first set of targeting data of the first set of features as a result of the matching. Alternatively, the computing unit might produce an error message indicating a discrepancy between the first set of targeting data and the respective coordinates from the design data.

In some embodiments the computing unit is further configured to 1.) receive an operator input on a requested second location, 2.) calculate a calculated visibility and/or a calculated score of applicability of the first set of features in the proximity of the requested second location, 3.) calculate a proposed second location for the instrument based on the calculated visibility and/or the score of applicability of the first set of features, 4.) provide guidance instructions for the operator to reach the proposed second location. The computing unit might be further configured to provide guidance instruction in respect of the survey environment and the survey task, in particular the walkability of the path.

The computing unit might consider other parameters in calculating the proposed second location. The other parameters might comprise feature related parameters, in particular apparent size of the feature, contrast of the feature, and redundancy and unambiguity of the feature. The computing might consider the accessibility of the proposed second location. Needless to say that the person skilled in the art could combine these and similar parameters in providing a method for selecting the proposed second location. The guidance instructions might comprise a path plotted on the map, arrows showing the walking direction, or similar visual or alternative, in particular audio, instructions. The computing unit might comprise a handheld unit to display the guidance instructions.

In some embodiments the survey instrument further comprises an automatic target search and tracking function for an identification of reference markers with known absolute positions. The automatic stationing functionality might further comprise 1.) updating the catalog of referencing features with identified reference markers, 2.) selecting at least one reference marker for the first set of features, 3.) comparing the respective targeting directions from the first set of targeting data and the known absolute position of the at least one reference marker, 4.) carrying out an assessment on the first set of targeting data based on a discrepancy of the respective targeting directions from the first set of targeting data and the known absolute position of the at least one reference marker. The second set of features might include the at least one reference marker. The second set of targeting data might be corrected with the known absolute position of the at least one reference marker.

The automatic target search and tracking function might also be beneficial for the cases when the survey instrument comprises a VPS/VISLAM as a pose tracking unit. Referencing the VPS/VISLAM utilizing recognized reference markers is especially beneficial as it might lead to a reduced drift of the coarse pose data, and with that the variance of the coarse pose might be reduced. The automatic target search and tracking function might be utilized to record the reference markers in the environment with known absolute position.

In some embodiments the computing unit is configured to identify flat surfaces in the environment based on the image and to calculate the coordinates of the flat surface based on plurality of point coordinates contained by the flat surface. While many prominent landmarks are recognizable by visual appearance, specific geometries, in particular extended flat surfaces of a specific dimension, can also be utilized as unambiguous prominent landmarks. The present invention is in no way limited to features identified by the visual appearance, but comprise features with unique geometries, in particular flat surfaces.

In some embodiments the score of applicability is based on at least one of 1.) line of sight of the features, 2.) apparent size of the features, 3.) the environment, 4.) the survey task, 5.) contrast of the features, 6.) positional stability of the feature, and 7.) redundancy and unambiguity of the features. Needless to say that the score of applicability might be based on a combination of the above. The score of applicability might be based on the combination of the above with further parameters. The survey instrument might comprise different pre-programmed options for the score of applicability. The pre-programmed options might be selected automatically by the survey instrument or by operator action.

In some embodiments the score of applicability is derived from a machine learning process. The machine learning process might be carried out externally. The machine learning might be a supervised learning, wherein the score of applicability is refined after comparing with the real identifiability and/or measurability of the features in a plurality of second poses. Alternatively, the survey instrument might provide feedback on the score of applicability to the machine learning process.

In some embodiments the survey instrument is configured to tag a survey data with a tagging pose of the survey instrument, wherein the tagging pose is either provided by 1.) the fine pose data, 2.) the coarse pose data. Tagging the measurements with the tagging pose is especially beneficial such that an off-line correction of the measurement data might be possible. The survey instrument might be relocated along a random path, wherein at least one of the measuring positions might be characterized only with the coarse pose data. The coarse pose data might be corrected with a measured drift of the instrument, wherein the drift is determined between two referenced poses. Complementary to the tagging pose a tagging time might also be provided.

In some embodiments the survey instrument is configured to store the first set of features, the first set of targeting data, the second set of features and the second set of targeting data. The survey system might be configured to update the tagging pose of the survey instrument based on the on the stored first set of targeting data and the stored second set of targeting data. Updating the tagging pose might be carried out off-line. The tagging pose might be updated utilizing a plurality of first and second sets of targeting data relating to different georeferenced positions. Furthermore, the correction might be applied "backward", that means that the first set of targeting data were determined after the second set of targeting data. The present invention is not limited to measure the first and second set of targeting data in a specific order.

The present invention also relates to a method of identifying a fine pose of a geodetic survey instrument. The method comprises the steps of 1.) acquiring an image of the environment by an imaging sensor of the instrument in a first pose of the instrument, 2.) creating or updating a catalog of referencing features based on the image, and calculating for each referencing feature a score of applicability, 3.) selecting a first set of features comprising a plurality of the features from the catalog of referencing features fulfilling a selection criterion regarding at least the score of applicability, and in particular further regarding a spatial distribution of the features in the first set of features, by the computing unit, 4.) in a first pose of the instrument providing measurement data for a first set of targeting data regarding targeting directions of the features in the first set of features, 5.) providing the first set of targeting data and assigning the targeting directions in the first set of targeting data to the respective features of the first set of features, 6.) performing a relocation of the instrument, and in particular providing the tracking of the coarse pose data, 7.) selecting a second set of features from the first set of features based on the score of applicability for each of the features, and in particular further based on the tracking of the coarse pose data, 8.) in a second pose of the instrument providing measurement data for a second set of targeting data regarding targeting directions of the features of the second set of features, 9.) providing the second set of targeting data and assigning the targeting directions in the second set of targeting data to the respective features of the second set of features, wherein at least one of the first and the second set of targeting data further comprises data regarding distances of the features of the respective set of features from the survey instrument, and 10.) determining a fine pose of the second pose relative to the first pose based on the first and second set of targeting data.

In some embodiments the method further comprises 1.) acquiring a second image of the environment in the second pose, 2.) identifying at least a part of the features comprised by first set of features based on image matching, and calculating a second score of applicability for the features in the first set of features, 3.) selecting the second set of features comprising a plurality of features from the first set of features based on the score of applicability and further based on the second score of applicability.

In some embodiments of the method the catalog of referencing features comprises one or more recognized flat surface and the first and the second set of targeting data comprise coordinates of the one or more flat surfaces, the coordinates of one or more flat surfaces being calculated from plurality of point coordinates contained by the respective flat surfaces.

In some embodiments of the method at least one of the first pose and the second pose is a referenced absolute pose.

In some embodiments of the method measuring the second set of targeting data is precedent to measuring the first set of targeting data.

In some embodiments of the method the instrument is relocated along a plurality of poses, wherein at least two poses in the plurality of the poses are georeferenced poses and at least one pose in the plurality of the poses is a non-georeferenced pose. The method further comprises updating the tagging pose of the at least one non-georeferenced pose by weighting the second set of targeting data derived in respect to the at least two georeferenced poses.

Needless to say that some embodiments of the method might benefit from one or more specific optional component of the survey instrument. In some embodiments of the method comprise the steps of 1.) carrying out of a survey task at the first pose of the instrument by measuring objects points in the surroundings of the device, in particular by an operator measurement, wherein for one or more measured point a corresponding image patch is automatically acquired, wherein the one or more image patch each representing one feature, in particular one recently detected feature, 2.) updating the catalog of referencing features based on the image patch and calculating by the computing unit the score of applicability for at least one recently detected feature, wherein the score of applicability is based on the respective image patches, 3.) selecting by the computing unit a first set of features comprising a plurality of the features from the catalog of referencing features, in particular comprising at least one recently detected feature, fulfilling a selection criterion regarding at least the score of applicability, 4.) providing measurement data for the first set of targeting data regarding targeting directions of the at least one recently detected features at least based on the respective image patch, in particular based on back-projected point coordinates, 5.) updating the gross score of applicability, based on the scores of applicability of the features of the updated first set of features, 6.) providing feedback to the operator on the readiness for relocation based on the gross score of applicability, in particular wherein the gross score of applicability exceeding a threshold 7.) optionally performing a feature search, in particular wherein the gross score of applicability is below the threshold, the feature search comprise a.) analyzing the image for candidates of features with a high score of applicability by the computing unit, b.) updating the catalog of referencing features based on the image patch, c.) selecting a first set of features comprising a plurality of the features from the catalog of referencing features, in particular comprising at least one feature detected in the feature search, d.) providing measurement data for the first set of targeting data regarding targeting directions of the at least one feature detected in the feature search, e.) updating the gross score of applicability, based on the scores of applicability of the features of the updated first set of features, f.) repeating steps (a-e) until the readiness for relocation based on the gross score of applicability is achieved, 8.) performing a relocation of the instrument and providing the tracking of the coarse pose data, 9.) selecting a second set of features from the first set of features by the computing unit based on the score of applicability, 10.) providing a coarse targeting direction for the features of the second set of features based on the coordinates measured at the first pose and the tracking of the coarse pose data provided by the pose tracking unit, 11.) targeting by the targeting unit the features of second set of features based on the tracking of the coarse pose data and acquiring an image patch representing the respective feature of the second set of features, 12.) providing the second set of targeting data and assigning the targeting directions in the second set of targeting data to the respective features of the second set of features based on an offset determined between the image patch extracted from the image at the first pose and the image patches extracted from the image at the second pose, 13.) providing a distance measurement for the features of the second set of features by the aligning the targeting unit based on the accurate direction to feature and performing distance measurement, 14.) determining a fine pose of the second pose relative to the first pose based on the first and second set of targeting data, in particular by matching the coordinates of the features measured at the first pose with the coordinates of features measured at the second pose.

The invention further relates to a computer program product for a survey system which, when executed by a computing unit of a surveying instrument, causes the automatic execution of the steps of a selected embodiment of the stationing method.

Some embodiments of the computer program product comprise at least one of 1.) a computer program code for the automatic recognition of the environment and the survey task, or 2.) a computer program code for operator input option for designating the environment and the survey task.

### BRIEF DESCRIPTION OF THE DRAWINGS

By way of example only, specific embodiments of the invention will be described more fully hereinafter with reference to the accompanying figures, wherein:
Figure 1 shows the schematics of an embodiment of a geodetic survey instrument according to the present invention.
Figure 2 shows the schematics of creating the catalog of referencing features.
Figure 3 shows the schematics of targeting and measuring the coordinates for the first set of features.
Figure 4 shows the repositioning of the survey instrument.
Figure 5 shows the schematics of targeting and measuring the coordinates for the second set of features.
Figure 6 show the schematics of determining the pose by resection.
Figure 7 shows the proposed second location and the guidance instructions for the operator.
Figure 8 shows indoor features for a catalog of referencing features.

### SPECIFIC EMBODIMENTS OF THE INVENTION

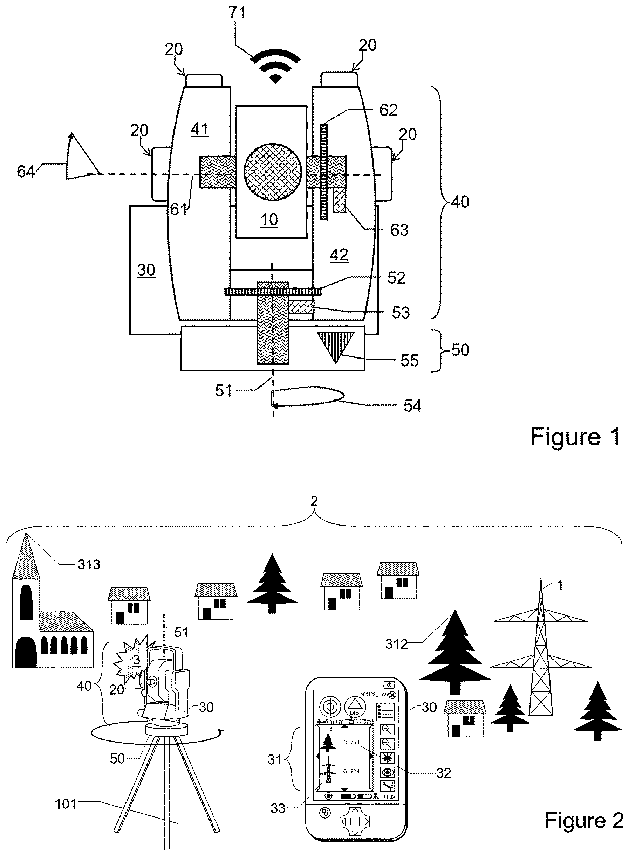

Figure 1 shows a schematic depiction of an embodiment of the survey instrument **40** comprising the targeting unit **10,** an IMU **55** as the pose tracking unit, the imaging sensors **20** and the computing unit **30** according to the invention.

The main frame of the survey instrument **40** comprises a first **41** and a second column **42,** wherein the targeting unit **10** is attached to both columns **41,42** so that it is tiltable around a tilting axis 61. The tilting of the targeting unit **10** is preferably realized by a motorized axis 62. Manual tilting around the tilting axis **61** might be possible under certain circumstances. The survey instrument **40** comprises a first angle sensor **63** configured to measure a tilting angle **64.**

The in Figure 1 depicted embodiment is a portable integrated survey instrument **40** configured to be mounted on a base **50** and rotatable about a rotational axis 51. The rotation axis **51** might be a vertical axis during the calibration and measurement operations. The survey instrument **40** may be rotated manually under certain circumstances or preferably by a motorized axis 52. The survey instrument comprises a second angle sensor **53** configured to measure a rotation angle **54** of the targeting unit **10** relative to the base 50. The tilting **64** and rotational angles **54** retrieved by the first **63** and second angle sensors **53** are transferred to the computing unit 30. The computing unit **30** provides driving commands for the motorized axes **52,62** in order to target a selected feature with the targeting unit 10.

The in Figure 1 depicted embodiment of the survey instrument **40** comprises the imaging sensor **20** as a camera array arranged to different locations in the frame. Other embodiments of the imaging sensor **20,** in particular a camera co-axial with the targeting unit 10 are also within the sense of the present invention.

The in Figure 1 depicted embodiment of the survey instrument **40** comprises a wireless interface **71.** The wireless interface **71** or a wired interface with equivalent functionality, might be configured to receive a digital model of the environment comprising at least one of a map of the environment, a design data of the environment, and a previous measurement data on the environment, as digital data. The computing unit **30** might reference the coarse pose data and/or the fine pose data to the received data. Needless to say that the wireless interface **71** or a wired interface with equivalent functionality might provide measurement data directly or indirectly, in particular utilizing a cloud server, to further survey instruments or to further computing units.

The pose tracking unit in the depicted embodiment comprises an IMU **55.** Other positioning sensors, in particular positioning sensors based on GNSS, cellular networks, wireless systems **71,** or imaging sensors **20** e.g. VPS or VISLAM are also possible according to the present invention. In the depicted embodiment the IMU **55** is integrated to the base **50.** Needless to say, that the person skilled in the art can introduce other placement of the positioning sensor, in particular the pose tracking unit might be integrated to the survey instrument **40,** might be distributed that one or more sensors are integrated to the survey instrument **40** and one or more sensors are integrated to the base **50.** Alternatively, at least a part of the sensors from the pose tracking unit might be attachable to survey instrument **40** or the base **50** in a temporary fashion. Survey instruments **40** comprising a pose tracking unit are especially suited to benefit from the present invention, however the present invention can be applied to survey instruments **40** without a pose tracking unit.

Figure 2-5 shows an embodiment of the stationing method. In this embodiment the first and second set of targeting data comprise the respective distance from the survey instrument **40,** while the second set of targeting data are measured after measuring the first set of targeting data. It goes without saying that the present invention is not limited to this embodiment. It is also clear to the person skilled in the art that some optional features described with this embodiment might be used in conjunction with other embodiments.

Figure 2 shows an environment **2** with pre-existing features **1,312,313,** which might be natural, e.g. tall trees or manmade e.g. church spires, power masts. The imaging sensor **20** acquires an image **3** of the environment **2.** The image **3** might be a true-angle image. The image **3** might be a panoramic image with at least 180° horizontal field of view. The image **3** might be a panoramic image with 360° horizontal field of view. The image **3** might be a full dome image. The image **3** might be stitched from a set of tiles. Needless to say some of the above features are combinable, i.e. the image **3** might be a true-angle full dome image.

In the Figure 2 depicted embodiment the imaging sensor **20** is a single camera attached to the side of the survey instrument **40.** By rotating the survey instrument **40** around the rotation axis **51** a true-angle panoramic image is created from a set of single images. The imaging sensor **20** might comprise a plurality of cameras and might acquire a panoramic/full dome image without rotating the survey instrument **40.**

The first pose **101** of the survey instrument **40** might be geo-referenced by appropriate means. Acquiring the image from a geo-referenced pose is an especially beneficial way of utilizing the present invention. However the present invention might be utilized in combination with a local reference system, i.e. the fine pose of first pose **101** might be referenced to an arbitrary local system. The present invention might also be utilized if fine pose of the first pose **101** is not known. For reasons of brevity and comprehensibility from here on the first pose **101** is assumed to be referenced while the fine pose second pose **102** is not known. The specific features of the reverse case might be applied accordingly.

The computing unit **30** creates a catalog of referencing features **31** based on the image **3.** Needless to say that the possible features **1,312,313** might be different depending on the surveying task, e.g. an indoor survey or construction yard might provide different prominent features than e.g. agricultural or a cartographic land survey. In some embodiments the computing unit **30** automatically recognizes the environment **2** and survey task based on the image **3.** In some embodiments the computing unit **30** receive the digital model of the environment. The computing unit **30** may automatically recognize the environment 2 and survey task based on the received data. In some embodiments the operator may provide information on the environment **2** and/or the survey task manually. Combinations and alternatives of these embodiments are also possible for the survey instrument **40** and method according to the present invention.

The computing unit **30** calculates a score of applicability **32** for the features **1,312,313** in the catalog of referencing features **31.** The score of applicability **32** might be based on the visibility of the feature, the apparent size of the feature, the survey environment **2,** the contrast of the feature, and the redundancy and unambiguity of the feature. The score of applicability **32** might be based on a measurability of the feature **1,312,313,** i.e. whether the position of the feature **1,312,313** can be measured according to the geodetic accuracy standards. The score of applicability **32** might also be based on the received digital data on the environment and/or the proposed second measurement location. The score of applicability **32** might be provided by a machine learning algorithm. The machine learning might be carried out online or off-line.

The computing unit **30** selects the first set of features from the catalog of referencing features **31** based on the score of applicability **32.** The computing unit might provide an image patch **33** clipped from the image **3,** wherein the image patch **33** representing a feature **1,** in particular the image patch might be utilized to target the represented feature **1.** The image patch **33** might be assigned to the represented feature **1.** In some embodiment the first set of features is selected without further operator input. In alternative embodiments, the operator might add or remove features to/from the first set of features. The computing unit **30** might evaluate a gross score of applicability based on scores of applicability **32** of the features of the first set of features **1,312,313,** in particular on the quantity, the quality and the spatial distribution of the features **1,312,313** in the catalog of referencing features **31** and the first set of features. The computing unit might automatically select further features **1,312,313** based on the image and add the features **1,312,313** to the catalog of referencing features **31** and/or the first set of features if the gross score of applicability does not fulfil a criterion, in particular a threshold criterion. The computing unit might provide an error message, if the gross score of applicability does not fulfil the criterion. The operator might trigger the automatic feature search upon receiving an error message that the gross score of applicability does not fulfil the criterion.

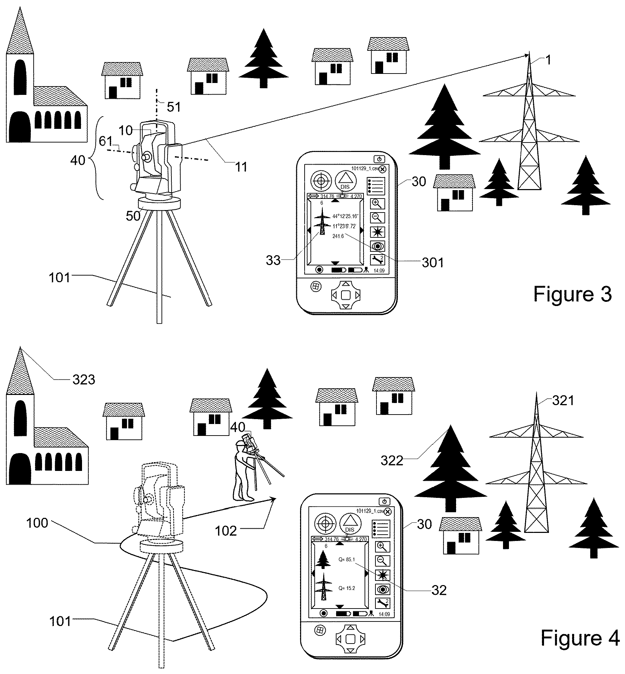

Figure 3 shows the measuring of coordinates **301** for a targeted feature **1** from the first set of features. In the depicted embodiment the targeting unit **10** targets the features from the first set of features by rotating the survey instrument **40** around the rotation axis **51** and tilting the targeting unit **10** around the tilting axis **61.** The angular coordinates might be derived from the angle readings of the first and second angle sensors, while the distance of the targeted feature might be provided from a rangefinder measurement by a laser beam **11.** Based on the angles the distance from the survey instrument and the first pose **101** of the survey instrument the computing unit **30** calculates the absolute coordinates **301** of the targeted feature **1.** The computing unit might assign the absolute coordinates **301** to the image patch **33.**

Alternatively, at least a portion of the first set of targeting data might be provided by the imaging sensor. While an embodiment where the first set of targeting data comprise the distance from the survey instrument is an especially beneficial way of utilizing the present invention, the present invention may also be applied if the first set of targeting data is limited to targeting directions.

Figure 4 shows the repositioning of the instrument **40** along a random path **100.** The pose tracking unit recognizes the relocation of the instrument and provides the coarse pose data on the second pose **102** of the instrument. The fine pose of the second pose **102** is not known. A second set of features comprising features **321,322,323** of the first set of features is selected. The score of applicability **32** might be updated based on the coarse pose data.

The pose tracking unit might be VPS or VISLAM system utilizing the image data provided by the imaging sensor **20.** The imaging sensor **20** might also continuously update the score of applicability **32** of the features **321,322,323** during the relocation of the instrument **40.** The second set of features might be selected during the relocation. The second set of features can also be selected after relocation is complete.

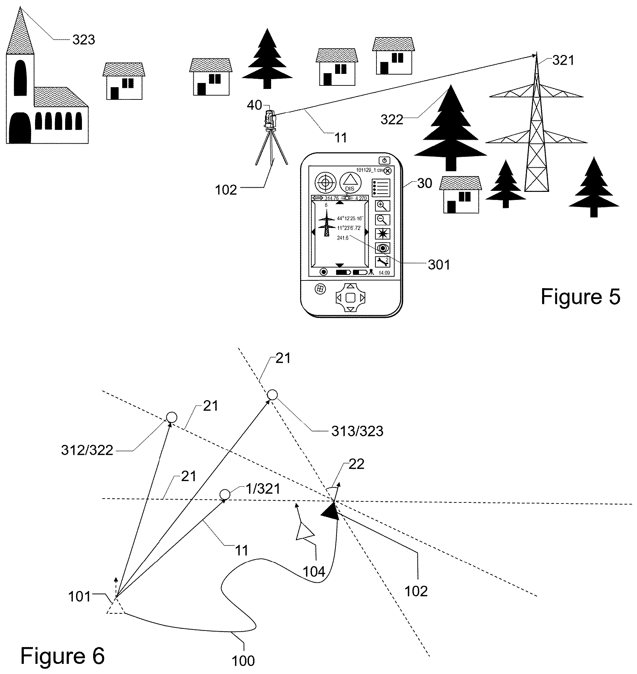

Figure 5 shows the measuring of relative coordinates for a targeted feature **321** from the second set of features. The targeting unit targets the feature from the second set of features by rotating the survey instrument **40** around the rotation axis and tilting the targeting unit around the tilting axis. The angular coordinates might be derived from the angle readings of the first and second angle sensors, while the distance of the targeted feature might be provided from a rangefinding measurement by a laser beam **11.** Since the targeted feature **321** is comprised by the first set of features its absolute coordinates **301** are known. By measuring the coordinates relative to the second pose **102** for a plurality of features **321,322,323** comprised by the second set of features the fine pose of the second pose **102** of the survey instrument **40** can be provided.

Figure 6 depicts the determination of the fine pose of the second pose **102** based on a resection after the instrument have been carried along a random path **100** from a first pose **101.** The coarse pose of the second pose **104** provided by the pose tracking unit might be different from the real/referenced fine pose **102.** It goes without saying that the present invention might be applied the other way around if the fine pose of the second pose **102** is known and the fine pose of the first pose **101** is unknown.

The first set of targeting data for the features **1,312,313** of the first set of features are measured by the targeting unit **10** analogous to the situation depicted in Figure 3. The first set of targeting data comprise the distance from the survey instrument in the first pose **101.** The second set of targeting data are limited to data regarding the targeting directions **21.** The second set of targeting data may comprise angular components **22** of the spherical coordinates of the features **321,322,323** relative to the second pose **102.** The fine pose of the second pose 102 might be an intersection of lines representing the targeting directions **21.**

It goes without saying that the first **101** and second pose **102** are distinguishable only by the fact that an image of the environment have to be acquired in the first pose **101.** Consequently the resection depicted in Figure 6 can also be applied if the first set of targeting data are limited to data regarding the targeting directions **21,** while the second set of targeting data comprises the distance from the survey instrument in the first pose **102.** Moreover the utilization of the "first pose" **101,** "first set of targeting data" does not imply that measuring the first set of targeting data from the first pose **101** is precedent to measuring the second set of targeting data. On the contrary the present invention can also be applied if measuring the second set of targeting data is precedent to measuring the first set of targeting data.

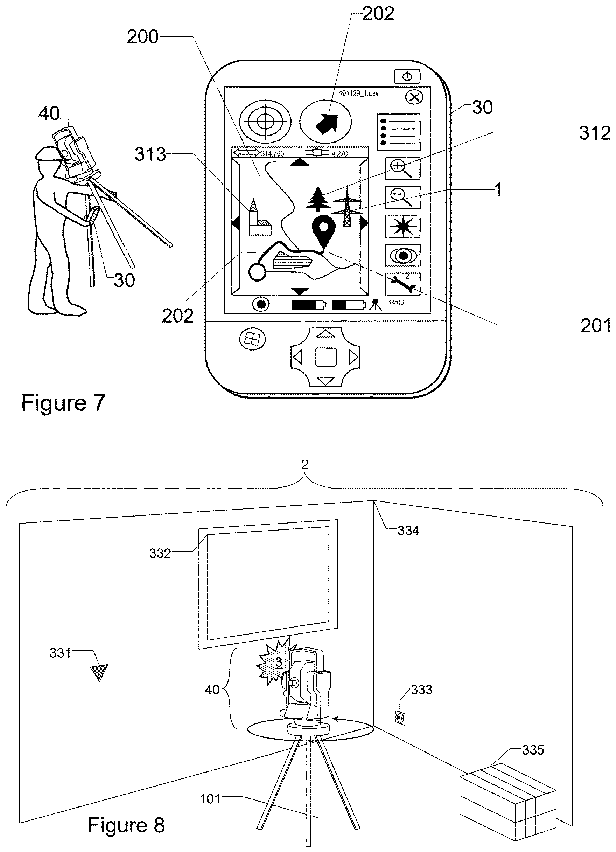

Figure 7 shows an embodiment wherein the computing unit **30** is configured to receive the map **200** of the environment **2.** Alternatively instead of the map **200** the digital model might be a design data, previous measurement data, or any suitable alternative. The features **1,312,313** of the catalog of referencing features are referenced to the map **200.**

The operator might select a requested second location for the continuation of the survey task. The computing unit **30** calculate a calculated visibility of the first set of features in the proximity of the requested second location. The computing unit **30** calculate a proposed second location **201** based on the calculated visibility of the features **1,312,313** in the first set of features. The computing unit **30** might consider other parameters in calculating the proposed second location **201.** The other parameters might comprise feature related parameters, in particular apparent size of the feature, contrast of the feature, and redundancy and unambiguity of the feature. The computing might consider the accessibility of the proposed second location **201.** Needless to say that the person skilled in the art could combine these and similar parameters for selecting the proposed second location **201.**

The computing unit **30** might provide guidance instruction **202** to reach the proposed second location **201.** The guidance instructions **202** might comprise a path plotted in the map **200,** arrows showing the walking direction, or similar visual or alternative, in particular audio, instructions. The computing unit **30** might comprise a handheld unit to display the guidance instructions **202.**

The examples depicted in Figures 2-5 represent an outdoor application. The present invention is in no way limited to these applications. The specific features of indoor applications or mixed in- and outdoor applications, in particular the creation of the catalog of referencing features, the calculation score of applicability, referencing the features to the design data, and providing the proposed second location **201** might be applied accordingly. Figure 8 show some exemplary features which might be utilized according to the present invention including previously placed reference markers **331,** door- or window frames **332,** power sockets **333,** corners of walls **334,** construction materials **335,** etc.

In some embodiments the computing unit **30** might identify from the image **3** taken, the type of environment **2** and the survey task. In some embodiments the operator might select the type of environment **2** and the survey task. For some embodiments the computing unit **30** is configured to receive the digital model of the environment. The computing unit **30** might identify from the received digital model the type of environment **2** and the survey task. Needless to say that the said option are combinable with each other and/or with similar alternatives. The score of applicability might be calculated in respect to the environment **2** and the survey task.

Although the invention is illustrated above, partly with reference to some specific embodiments, it must be understood that numerous modifications and combinations of different features of the embodiments can be made within the scope of the appended claims.

## Claims

1. A geodetic survey instrument (40) comprising
- a targeting unit (10), configured to target an object in an environment (2) and to provide a targeting data measurement of the targeted object, the targeting data comprising targeting directions or coordinates,
- an imaging sensor (20), **an** optical axis of the imaging sensor (20) being referenceable to a targeting direction (21) of the targeting unit (10), and
- a computing unit (30),
**characterized in that**
the geodetic survey instrument (40) comprises an automatic stationing functionality being configured for providing the automatic execution of
- acquiring an image (3) of the environment (2) by the imaging sensor (20) in a first pose (101) of the instrument,
- creating or updating a catalog of referencing features (31) based on the image (3), and calculating for each referencing feature a score of applicability (32) by the computing unit (30), wherein
o the score of applicability (32) characterizes an identifiability and/or measurability of the features in an image acquired from different locations by the imaging sensor (20),
o the identifiability characterizing at least a retrievability of the feature (31) in images acquired from different locations by the imaging sensor (20), and
o measurability characterizing whether a position of the feature (31) can be measured according to geodetic accuracy standards,
- selecting a first set of features comprising a plurality of the features from the catalog of referencing features (31) fulfilling a selection criterion regarding at least the score of applicability (32) by the computing unit (30),
- in a first pose (101) of the instrument providing measurement data for a first set of targeting data regarding targeting directions (21) of the features in the first set of features (1,312,313),
- providing the first set of targeting data and assigning the targeting directions (21) in the first set of targeting data to the respective features of the first set of features (1,312,313),
- selecting a second set of features from the first set of features by the computing unit (30) based on the score of applicability (32) for each of the features,
- in a second pose (102) of the instrument providing measurement data for a second set of targeting data regarding targeting directions (21) of the features of the second set of features (321,322,323),
- providing the second set of targeting data and assigning the targeting directions (21) in the second set of targeting data to the respective features of the second set of features (321,322,323), wherein
o at least one of the first and the second set of targeting data further comprises data regarding distances of the features of the respective set of features from the survey instrument (40),
and
- determining a fine pose of the second pose (102) relative to the first pose (101) based on the first and second set of targeting data
wherein the instrument (40) is relocated between the first pose (101) and the second pose (102).

2. The survey instrument (40) according to claim 1 further comprising
- a base unit (50),
- a support unit being mounted on the base (50) and configured to be rotatable relative to the base (50) by a motorized axis (51), and
- a first angle sensor (53) configured to measure a rotation angle (54) of the support unit,
the targeting unit (10) being mounted on the support unit and being tiltable around a motorized tilting axis (61), wherein the instrument comprising a second angle sensor (63) configured to measure the tilting angle (64) of the targeting unit (10) relative to the support unit, and the targeting unit (10) comprising a beam exit of a distance measuring beam (11) of a distance meter, wherein the measuring beam (11) of the distance meter defining the targeting direction (21).

3. The survey instrument (40) according to any of the preceding claims,
- the survey instrument (40) further comprising a pose tracking unit configured to provide a tracking of coarse pose data of the instrument,
- the automatic stationing functionality further comprising providing the tracking of the coarse pose data by the pose tracking unit, and
- the selection a second set of features from the first set of features being further based on the tracking of the coarse pose data.

4. The survey instrument (40) according to any of the preceding claims, wherein the imaging sensor (20) is arranged and configured for use in a sighting unit of the targeting unit (10) for aligning the targeting direction (21) onto a target to be measured.

5. The survey instrument (40) according to any of the preceding claims wherein automatic stationing functionality further comprises
- deriving a gross score of applicability, based on scores of applicability (32) of the features of the first set of features (1,312,313), and
- providing feedback to the operator on a readiness for relocation based on the gross score of applicability.

6. The survey instrument (40) according to any of the preceding claims, wherein the computing unit (30) **is** configured to receive a digital model of the environment comprising at least one of
- a map (200) of the environment,
- a design data of the environment, and
- a previous targeting data measurement data of the environment (2),
the computing unit (30) being further configured to
- reference the fine pose and/or a coarse pose of the survey instrument to the digital model, and
- reference the position of the features in the catalog of referencing features (31) to the digital model.

7. The survey instrument (40) according to claim 6, wherein the computing unit (30) **is** further configured to
- receive an operator input on a requested second location,
- calculate a calculated visibility and/or a calculated score of applicability of the first set of features in the proximity of the requested second location,
- calculate a proposed second location (201) for the instrument based on the calculated visibility and/or the calculated score of applicability of the first set of features,
- provide guidance instructions (202) for the operator to reach the proposed second location (201).

8. The survey instrument (40) according to any of the preceding claims, wherein the computing unit (30) is configured to identify flat surfaces in the environment (2) based on the image (3) and to calculate coordinates of the flat surface based on plurality of point coordinates contained by the flat surface.

9. The survey instrument (40) according to any of the preceding claims being configured to
- tag a survey data with a tagging pose of the survey instrument, wherein the tagging pose is either provided by
o the fine pose data, or
o the coarse pose data,
- store the first set of features, the first set of targeting data, the second set of features and the second set of targeting data,
- update the tagging pose of the survey instrument based on the stored first set of targeting data and the stored second set of targeting data.

10. A method for identifying a fine pose of a geodetic survey instrument (40), the method comprising the steps of
- acquiring an image (3) of the environment (2) by an imaging sensor (20) of the instrument in a first pose (101) of the instrument,
- creating or updating a catalog of referencing features (31) based on the image (3), and calculating for each referencing feature a score of applicability (32),
- selecting a first set of features comprising a plurality of the features from the catalog of referencing features (31) fulfilling a selection criterion regarding at least the score of applicability (32) by the computing unit (30), wherein
o the score of applicability (32) characterizes an identifiability and/or measurability of the features in an image acquired from different locations by the imaging sensor (20),
o the identifiability characterizes at least a retrievability of the feature (31) in images acquired from different locations by the imaging sensor (20), and
o the measurability characterizes whether a position of the feature (31) can be measured according to geodetic accuracy standards,
- in a first pose (101) of the instrument providing measurement data for a first set of targeting data regarding targeting directions (21) of the features in the first set of features (1,312,323),
- providing the first set of targeting data and assigning the targeting directions (21) in the first set of targeting data to the respective features of the first set of features (1,312,313),
- performing a relocation of the instrument,
- selecting a second set of features from the first set of features based on the score of applicability (32) for each of the features,
- in a second pose (102) of the instrument providing measurement data for a second set of targeting data regarding targeting directions (21) of the features of the second set of features (321,322,323),
- providing the second set of targeting data and assigning the targeting directions (21) in the second set of targeting data to the respective features of the second set of features (321,322,323), wherein
o at least one of the first and the second set of targeting data further comprises data regarding distances of the features of the respective set of features from the survey instrument,
and
- determining a fine pose of the second pose (102) relative to the first pose (101) based on the first and second set of targeting data.

11. The method according to claim 10, wherein at least one of the first pose (101) and the second pose (102) **is** a referenced absolute pose.

12. The method according to any of the claims 10 to 11, further comprising
- acquiring a second image of the environment (2) at the second pose (102),
- identifying at least a part of the features comprised by first set of features (1,312,313) based on image matching, and calculating a second score of applicability for the features in the first set of features,
- selecting the second set of features comprising a plurality of features from the first set of features (1,312,313) based on the score of applicability (32) and further based on the second score of applicability.

13. The method according to any of the claims 10 to 12 wherein measuring the second set of targeting data is precedent to measuring the first set of targeting data.

14. The method according to claim 13, wherein the instrument is relocated along a plurality of poses, wherein at least two poses in the plurality of the poses are referenced poses and at least one pose in the plurality of the poses is a non-referenced pose, the method further comprising
- updating a tagging pose of the at least one non-referenced pose by weighting the second set of targeting data derived in respect to the at least two referenced poses.

15. A computer program product for a survey system, which when executed by a computing unit (30) of a survey instrument (40) according to any of the claims 1 to 9 causes the automatic execution of the steps of the method according to any of the claims 10 to 14.

## Patentansprüche

1. Geodätisches Vermessungsinstrument (40), umfassend
- eine Zieleinheit (10), die dazu ausgestaltet ist, ein Objekt in einer Umgebung (2) anzuzielen und eine Zieldatenmessung des angezielten Objekts bereitzustellen, wobei die Zieldaten Zielrichtungen oder -koordinaten umfassen,
- einen Bildgebungssensor (20), wobei eine optische Achse des Bildgebungssensors (20) einer Zielrichtung (21) der Zieleinheit (10) zuordenbar ist,
und
- eine Recheneinheit (30),
**dadurch gekennzeichnet, dass**
das geodätische Vermessungsinstrument (40) eine automatische Stationierungsfunktionalität umfasst, die ausgestaltet ist zum Bereitstellen der automatischen Ausführung von dem
- Aufnehmen eines Bildes (3) der Umgebung (2) durch den Bildgebungssensor (20) in einer ersten Pose (101) des Instruments,
- Erstellen oder Aktualisieren eines Katalogs von Referenzierungsmerkmalen (31) basierend auf dem Bild (3) und Berechnen, für jedes Referenzierungsmerkmal, einer Anwendbarkeitsbewertung (32) durch die Recheneinheit (30), wobei
o die Anwendbarkeitsbewertung (32) eine Identifizierbarkeit und/oder Messbarkeit der Merkmale in einem Bild kennzeichnet, das von unterschiedlichen Standorten aus durch den Bildgebungssensor (20) aufgenommen wird,
∘ wobei die Identifizierbarkeit zumindest eine Abrufbarkeit des Merkmals (31) in Bildern kennzeichnet, die von unterschiedlichen Standorten aus durch den Bildgebungssensor (20) aufgenommen werden, und
∘ wobei die Messbarkeit kennzeichnet, ob eine Position des Merkmals (31) gemäß geodätischen Genauigkeitsstandards gemessen werden kann,
- Auswählen eines ersten Satzes von Merkmalen, der eine Vielzahl der Merkmale aus dem Katalog von Referenzierungsmerkmalen (31) umfasst, die ein Auswahlkriterium hinsichtlich zumindest der Anwendbarkeitsbewertung (32) erfüllen, durch die Recheneinheit (30),
- in einer ersten Pose (101) des Instruments Bereitstellen von Messdaten für einen ersten Satz von Zieldaten hinsichtlich Zielrichtungen (21) der Merkmale in dem ersten Satz von Merkmalen (1, 312, 313),
- Bereitstellen des ersten Satzes von Zieldaten und Zuweisen der Zielrichtungen (21) in dem ersten Satz von Zieldaten zu den jeweiligen Merkmalen des ersten Satzes von Merkmalen (1, 312, 313),
- Auswählen eines zweiten Satzes von Merkmalen aus dem ersten Satz von Merkmalen durch die Recheneinheit (30) basierend auf der Anwendbarkeitsbewertung (32) für jedes der Merkmale,
- in einer zweiten Pose (102) des Instruments Bereitstellen von Messdaten für einen zweiten Satz von Zieldaten hinsichtlich Zielrichtungen (21) der Merkmale in dem zweiten Satz von Merkmalen (321, 322, 323),
- Bereitstellen des zweiten Satzes von Zieldaten und Zuweisen der Zielrichtungen (21) in dem zweiten Satz von Zieldaten zu den jeweiligen Merkmalen des zweiten Satzes von Merkmalen (321, 322, 323), wobei
o zumindest einer von dem ersten und dem zweiten Satz von Zieldaten ferner Daten hinsichtlich Entfernungen der Merkmale des jeweiligen Satzes von Merkmalen von dem Vermessungsinstrument (40) umfasst,
und
- Bestimmen einer Feinpose der zweiten Pose (102) bezüglich der ersten Pose (101) basierend auf dem ersten und zweiten Satz von Zieldaten, wobei das Instrument (40) zwischen der ersten Pose (101) und der zweiten Pose (102) versetzt wird.

2. Vermessungsinstrument (40) nach Anspruch 1, ferner umfassend
- eine Basiseinheit (50),
- eine Stützeinheit, die auf der Basis (50) montiert ist und dazu ausgestaltet ist, bezüglich der Basis (50) durch eine motorisierte Achse (51) drehbar zu sein, und
- einen ersten Winkelstellungssensor (53), der dazu ausgestaltet ist, einen Drehwinkel (54) der Stützeinheit zu messen,
wobei die Zieleinheit (10) auf der Stützeinheit montiert ist und um eine motorisierte Kippachse (61) kippbar ist, wobei das Instrument einen zweiten Winkelstellungssensor (63) umfasst, der dazu ausgestaltet ist, den Kippwinkel (64) der Zieleinheit (10) bezüglich der Stützeinheit zu messen, und die Zieleinheit (10) einen Strahlaustritt eines Entfernungsmessstrahls (11) eines Entfernungsmesser umfasst, wobei der Messstrahl (11) des Entfernungsmesser die Zielrichtung (21) definiert.

3. Vermessungsinstrument (40) nach einem der vorhergehenden Ansprüche,
- wobei das Vermessungsinstrument (40) ferner eine Poseverfolgungseinheit umfasst, die dazu ausgestaltet ist, eine Verfolgung von Grobposedaten des Instruments bereitzustellen,
- wobei die automatische Stationierungsfunktionalität das Bereitstellen der Verfolgung der Grobposedaten durch die Poseverfolgungseinheit umfasst, und
- wobei die Auswahl eines zweiten Satzes von Merkmalen aus dem ersten Satz von Merkmalen ferner auf der Verfolgung der Grobposedaten basiert.

4. Vermessungsinstrument (40) nach einem der vorhergehenden Ansprüche, wobei der Bildgebungssensor (20) zur Verwendung in einer Visiereinheit der Zieleinheit (10) zum Ausrichten der Zielrichtung (12) auf das zu messende Ziel angeordnet und ausgestaltet ist.

5. Vermessungsinstrument (40) nach einem der vorhergehenden Ansprüche, wobei die automatische Stationierungsfunktionalität ferner Folgendes umfasst
- Ableiten einer Bruttoanwendbarkeitsbewertung basierend auf Anwendbarkeitsbewertungen (32) der Merkmale des ersten Satzes von Merkmalen (1, 312, 313), und
- Bereitstellen von Rückmeldungen an den Bediener über eine Bereitschaft zur Versetzung basierend auf der Bruttoanwendbarkeitsbewertung.

6. Vermessungsinstrument (40) nach einem der vorhergehenden Ansprüche, wobei die Recheneinheit (30) dazu ausgestaltet ist, ein digitales Modell der Umgebung zu empfangen, das zumindest eines von Folgendem umfasst
- eine Karte (200) der Umgebung,
- Entwurfsdaten des Umgebung und
- vorherige Zieldaten-Messdaten der Umgebung (2),
wobei die Recheneinheit (30) ferner zu Folgendem konfiguriert ist,
- Referenzieren der Feinpose und/oder einer Grobpose des Vermessungsinstruments auf das digitale Modell und
- Referenzieren der Position de Merkmale in dem Katalog von Referenzierungsmerkmalen (31) auf das digitale Modell.

7. Vermessungsinstrument (40) nach Anspruch 6, wobei die Recheneinheit (30) ferner zu Folgendem konfiguriert ist:
- Empfangen einer Bedienereingabe an einem angeforderten zweiten Standort,
- Berechnen einer berechneten Sichtbarkeit und/oder einer berechneten Anwendbarkeitsbewertung des ersten Satzes von Merkmalen in der Nähe des angeforderten zweiten Standortes,
- Berechnen eines vorgeschlagenen zweiten Standortes (201) für das Instrument basierend auf der berechneten Sichtbarkeit und/oder der berechneten Anwendbarkeitsbewertung des ersten Satzes von Merkmalen,
- Bereitstellen von Anleitungsanweisungen (202) für den Bediener, um den vorgeschlagenen zweiten Standort (201) zu erreichen.

8. Vermessungsinstrument (40) nach einem der vorhergehenden Ansprüche, wobei die Recheneinheit (30) dazu ausgestaltet ist, flache Oberflächen in der Umgebung (2) basierend auf dem Bild (3) zu identifizieren und Koordinaten der flachen Oberfläche basierend auf der Vielzahl von Punktkoordinaten zu berechnen, die durch die flache Oberfläche enthalten sind.

9. Vermessungsinstrument (40) nach einem der vorhergehenden Ansprüche, das zu Folgendem ausgestaltet ist
- Kennzeichnen von Vermessungsdaten mit einer Kennzeichungspose des Vermessungsinstruments, wobei die Kennzeichungspose bereitgestellt wird entweder von:
o den Feinposedaten oder
o den Grobposedaten,
- Speichern des ersten Satzes von Merkmalen, des ersten Satzes von Zieldaten, des zweiten Satzes von Merkmalen und des zweiten Satzes von Zieldaten,
- Aktualisieren der Kennzeichungspose des Vermessungsinstruments basierend auf dem gespeicherten ersten Satz von Zieldaten und dem gespeicherten zweiten Satz von Zieldaten.

10. Verfahren zum Identifizieren einer Feinpose eines geodätischen Vermessungsinstruments (40), wobei das Verfahren die folgenden Schritte umfasst
- Aufnehmen eines Bildes (3) der Umgebung (2) durch einen Bildgebungssensor (20) des Instruments in einer ersten Pose (101) des Instruments,
- Erstellen oder Aktualisieren eines Katalogs von Referenzierungsmerkmalen (31) basierend auf dem Bild (3) und Berechnen, für jedes Referenzierungsmerkmal, einer Anwendbarkeitsbewertung (32),
- Auswählen eines ersten Satzes von Merkmalen, der eine Vielzahl der Merkmale aus dem Katalog von Referenzierungsmerkmalen (31) umfasst, die ein Auswahlkriterium hinsichtlich zumindest der Anwendbarkeitsbewertung (32) durch die Recheneinheit (30) erfüllen, wobei
o die Anwendbarkeitsbewertung (32) eine Identifizierbarkeit und/oder Messbarkeit der Merkmale in einem Bild kennzeichnet, das von unterschiedlichen Standorten aus durch den Bildgebungssensor (20) aufgenommen wird,
o die Identifizierbarkeit zumindest eine Abrufbarkeit des Merkmals (31) in Bildern kennzeichnet, die von unterschiedlichen Standorten aus durch den Bildgebungssensor (20) aufgenommen werden, und
∘ die Messbarkeit kennzeichnet, ob eine Position des Merkmals (31) gemäß geodätischen Genauigkeitsstandards gemessen werden kann,
- in einer ersten Pose (101) des Instruments Bereitstellen von Messdaten für einen ersten Satz von Zieldaten hinsichtlich Zielrichtungen (21) der Merkmale in dem ersten Satz von Merkmalen (1, 312, 323),
- Bereitstellen des ersten Satzes von Zieldaten und Zuweisen der Zielrichtungen (21) in dem ersten Satz von Zieldaten zu den jeweiligen Merkmalen des ersten Satzes von Merkmalen (1, 312, 313),
- Durchführen einer Versetzung des Instruments,
- Auswählen eines zweiten Satzes von Merkmalen aus dem ersten Satz von Merkmalen basierend auf der Anwendbarkeitsbewertung (32) für jedes der Merkmale,
- in einer zweiten Pose (102) des Instruments Bereitstellen von Messdaten für einen zweiten Satz von Zieldaten hinsichtlich Zielrichtungen (21) der Merkmale des zweiten Satzes von Merkmalen (321, 322, 323),
- Bereitstellen des zweiten Satzes von Zieldaten und Zuweisen der Zielrichtungen (21) in dem zweiten Satz von Zieldaten zu den jeweiligen Merkmalen des zweiten Satzes von Merkmalen (321, 322, 323), wobei
o zumindest einer von dem ersten und dem zweiten Satz von Zieldaten ferner Daten hinsichtlich Entfernungen der Merkmale des jeweiligen Satzes von Merkmalen von dem Vermessungsinstrument umfasst,
und
- Bestimmen einer Feinpose der zweiten Pose (102) bezüglich der ersten Pose (101) basierend auf dem ersten und zweiten Satz von Zieldaten.

11. Verfahren nach Anspruch 10, wobei zumindest eine von der ersten Pose (101) und der zweiten Pose (102) ein referenzierte absolute Pose ist.

12. Verfahren nach einem der Ansprüche 10 bis 11, ferner umfassend
- Aufnehmen eines zweiten Bildes der Umgebung (2) an der zweiten Pose (102),
- Identifizieren von zumindest einem Teil der Merkmale, die von dem Satz von Merkmalen (1, 312, 313) umfasst sind, basierend auf einer Bildübereinstimmung und Berechnen einer zweiten Anwendbarkeitsberwertung für die Merkmale des ersten Satzes von Merkmalen,
- Auswählen des zweiten Satzes von Merkmalen, der eine Vielzahl von Merkmalen aus dem ersten Satz von Merkmalen (1, 312, 313) umfasst, basierend auf der Anwendbarkeitsbewertung (32) und ferner basierend auf der zweiten Anwendbarkeitsbewertung.

13. Verfahren nach einem der Ansprüche 10 bis 12 wobei das Messen des zweiten Satzes von Zieldaten dem Messen des ersten Satzes von Zieldaten vorausgeht.

14. Verfahren nach Anspruch 13, wobei das Instrument entlang einer Vielzahl von Posen versetzt wird, wobei zumindest zwei Posen in der Vielzahl von Posen referenzierte Posen sind und zumindest eine Pose in der Vielzahl von Posen eine nicht referenzierte Pose ist, wobei das Verfahren ferner Folgendes umfasst
- Aktualisieren einer Kennzeichungspose der zumindest einen nicht referenzierten Pose durch Gewichten des zweiten Satzes von Zieldaten, die in Bezug auf die zumindest zwei referenzierten Posen abgeleitet werden.

15. Computerprogrammprodukt für ein Vermessungssystem, das, wenn es durch eine Recheneinheit (30) eines Vermessungsinstruments (40) nach einem der Ansprüche 1 to 9 ausgeführt wird, die automatische Ausführung der Schritte des Verfahrens nach einem der Ansprüche 10 bis 14 bewirkt.

## Revendications

1. Instrument de relevé géodésique (40) comprenant :
- une unité de ciblage (10), conçue pour cibler un objet dans un environnement (2) et pour produire une mesure de données de ciblage de l'objet ciblé, lesdites données de ciblage comprenant des directions ou des coordonnées de ciblage,
- un capteur d'imagerie (20), un axe optique dudit capteur d'imagerie (20) pouvant être référencé par rapport à une direction de ciblage (21) de ladite unité de ciblage (10), et
- une unité informatique (30),
**caractérisé en ce que**
l'instrument de relevé géodésique (40) comprend une fonctionnalité automatique de stationnement conçue pour assurer l'exécution automatique des étapes suivantes :
- prise d'une image (3) de l'environnement (2) par le capteur d'imagerie (20), l'instrument étant dans une première pose (101),
- création ou actualisation d'un catalogue d'éléments de référence (31) compte tenu de l'image (3), et calcul, par l'unité informatique (30), d'un niveau d'applicabilité (32) pour chaque élément de référence,
o le niveau d'applicabilité (32) caractérisant une aptitude des éléments à être identifiés et/ou mesurés dans une image prise par le capteur d'imagerie (20) à différents emplacements,
o l'aptitude à être identifié caractérisant au moins une aptitude de l'élément (31) à être retrouvé dans des images prises par le capteur d'imagerie (20) à différents emplacements, et
o l'aptitude à être mesuré caractérisant la possibilité de mesurer la position de l'élément (31) selon les normes géodésiques d'exactitude,
- choix, par l'unité informatique (30), d'un premier jeu d'éléments comprenant une pluralité d'éléments du catalogue d'éléments de référence (31) qui remplissent un critère de choix concernant au moins le niveau d'applicabilité (32),
- **l'instrument** étant dans une première pose (101), production de données de mesure pour un premier jeu de données de ciblage concernant les directions de ciblage (21) des éléments du premier jeu d'éléments (1, 312, 313),
- production du premier jeu de données de ciblage et affectation des directions de ciblage (21) du premier jeu de données de ciblage aux éléments respectifs du premier jeu d'éléments (1, 312, 313),
- choix, par l'unité informatique (30), d'un deuxième jeu d'éléments dans le premier jeu d'éléments compte tenu du niveau d'applicabilité (32) de chacun des éléments,
- l'instrument étant dans une deuxième pose (102), production de données de mesure pour un deuxième jeu de données de ciblage concernant les directions de ciblage (21) des éléments du deuxième jeu d'éléments (321, 322, 323),
- production du deuxième jeu de données de ciblage et affectation des directions de ciblage (21) du deuxième jeu de données de ciblage aux éléments respectifs du deuxième jeu d'éléments (321, 322, 323),
o le premier et/ou le deuxième jeu de données de ciblage comprenant en outre des données concernant la distance entre les éléments du jeu d'éléments respectif et l'instrument de relevé (40),
et
- détermination d'une valeur précise de la deuxième pose (102) par rapport à la première pose (101) compte tenu du premier et du deuxième jeu de données de ciblage,
l'instrument (40) étant replacé entre la première pose (101) et la deuxième pose (102).

2. Instrument de relevé (40) selon la revendication 1, comprenant en outre :
- une unité de base (50),
- une unité support montée sur la base (50) et conçue pour pouvoir tourner, par rapport à ladite base (50), sous l'effet d'un axe (51) motorisé, et
- un premier capteur d'angle (53) conçu pour mesurer un angle de rotation (54) de l'unité support,
l'unité de ciblage (10) étant montée sur ladite unité support et pouvant être inclinée sur un axe d'inclinaison (61) motorisé, l'instrument comprenant un deuxième capteur d'angle (63) conçu pour mesurer l'angle d'inclinaison (64) de l'unité de ciblage (10) par rapport à l'unité support, et l'unité de ciblage (10) comprenant une sortie de faisceau pour un faisceau de mesure (11) de distance d'un distancemètre, ledit faisceau de mesure (11) du distancemètre définissant la direction de ciblage (21).

3. Instrument de relevé (40) selon l'une quelconque des revendications précédentes,
- ledit instrument de relevé (40) comprenant en outre une unité de suivi des poses conçue pour produire le suivi des données de pose approximative de l'instrument,
- la fonctionnalité automatique de stationnement comprenant en outre la production du suivi des données de pose approximative par l'unité de suivi des poses, et
- le choix d'un deuxième jeu d'éléments dans le premier jeu d'éléments tenant compte en outre du suivi des données de pose approximative.

4. Instrument de relevé (40) selon l'une quelconque des revendications précédentes, dans lequel le capteur d'imagerie (20) est disposé et conçu pour être utilisé dans une unité de visée de l'unité de ciblage (10) afin d'aligner la direction de ciblage (21) sur une cible à mesurer.

5. Instrument de relevé (40) selon l'une quelconque des revendications précédentes, dans lequel la fonctionnalité automatique de stationnement comprend en outre les étapes consistant à :
- déduire un niveau approximatif d'applicabilité, compte tenu du niveau d'applicabilité (32) des éléments du premier jeu d'éléments (1, 312, 313), et
- fournir un retour à l'utilisateur concernant la disponibilité pour un replacement, compte tenu dudit niveau approximatif d'applicabilité.

6. Instrument de relevé (40) selon l'une quelconque des revendications précédentes, dans lequel l'unité informatique (30) est conçue pour recevoir un modèle numérique de l'environnement comprenant :
- une carte (200) de l'environnement,
- des données de conception de l'environnement, et/ou
- des données de mesure précédentes pour des données de ciblage sur l'environnement (2),
l'unité informatique (30) étant en outre conçue pour :
- référencer la pose précise et/ou une pose approximative de l'instrument de relevé vis-à-vis du modèle numérique, et
- référencer la position des éléments du catalogue d'éléments de référence (31) vis-à-vis du modèle numérique.

7. Instrument de relevé (40) selon la revendication 6, dans lequel l'unité informatique (30) est conçue pour, en outre :
- recevoir une entrée utilisateur relative à un deuxième emplacement demandé,
- calculer une visibilité calculée et/ou un niveau d'applicabilité calculé du premier jeu d'éléments à proximité du deuxième emplacement demandé,
- calculer un deuxième emplacement proposé (201) pour l'instrument compte tenu de ladite visibilité calculée et/ou dudit niveau d'applicabilité calculé du premier jeu d'éléments,
- produire des instructions de guidage (202) destinées à l'utilisateur pour at-teindre ledit deuxième emplacement proposé (201).

8. Instrument de relevé (40) selon l'une quelconque des revendications précédentes, dans lequel l'unité informatique (30) est conçue pour identifier des surfaces planes dans l'environnement (2) compte tenu de l'image (3), et pour calculer les coordonnées de la surface plane compte tenu des coordonnées d'une pluralité de points situés sur ladite surface plane.

9. Instrument de relevé (40) selon l'une quelconque des revendications précédentes, conçu pour :
- baliser des données de relevé avec un pose de balisage de l'instrument de relevé, ladite pose de balisage étant produite par :
o soit les données de pose précise,
o soit les données de pose approximative,
- enregistrer le premier jeu d'éléments, le premier jeu de données de ciblage, le deuxième jeu d'éléments et le deuxième jeu de données de ciblage,
- actualiser la pose de balisage de l'instrument de relevé compte tenu du premier jeu de données de ciblage enregistré et du deuxième jeu de données de ciblage enregistré.

10. Procédé d'identification d'une pose précise d'un instrument de relevé géodésique (40), ledit procédé comprenant les étapes suivantes :
- prise d'une image (3) de l'environnement (2) par un capteur d'imagerie (20) de l'instrument, ledit instrument étant dans une première pose (101),
- création ou actualisation d'un catalogue d'éléments de référence (31) compte tenu de l'image (3), et calcul d'un niveau d'applicabilité (32) pour chaque élément de référence,
- choix, par l'unité informatique (30), d'un premier jeu d'éléments comprenant une pluralité d'éléments du catalogue d'éléments de référence (31) qui remplissent un critère de choix concernant au moins le niveau d'applicabilité (32),
o le niveau d'applicabilité (32) caractérisant une aptitude des éléments à être identifiés et/ou mesurés dans une image prise par le capteur d'imagerie (20) à différents emplacements,
o l'aptitude à être identifié caractérisant au moins une aptitude de l'élément (31) à être retrouvé dans des images prises par le capteur d'imagerie (20) à différents emplacements, et
o l'aptitude à être mesuré caractérisant la possibilité de mesurer la position de l'élément (31) selon les normes géodésiques d'exactitude,
- l'instrument étant dans une première pose (101), production de données de mesure pour un premier jeu de données de ciblage concernant les directions de ciblage (21) des éléments du premier jeu d'éléments (1, 312, 313),
- production du premier jeu de données de ciblage et affectation des directions de ciblage (21) du premier jeu de données de ciblage aux éléments respectifs du premier jeu d'éléments (1, 312, 313),
- réalisation d'un replacement de l'instrument,
- choix d'un deuxième jeu d'éléments dans le premier jeu d'éléments compte tenu du niveau d'applicabilité (32) de chacun des éléments,
- l'instrument étant dans une deuxième pose (102), production de données de mesure pour un deuxième jeu de données de ciblage concernant les directions de ciblage (21) des éléments du deuxième jeu d'éléments (321, 322, 323),
- production du deuxième jeu de données de ciblage et affectation des directions de ciblage (21) du deuxième jeu de données de ciblage aux éléments respectifs du deuxième jeu d'éléments (321, 322, 323),
o le premier et/ou le deuxième jeu de données de ciblage comprenant en outre des données concernant la distance entre les éléments du jeu d'éléments respectif et l'instrument de relevé,
et
- détermination d'une valeur précise de la deuxième pose (102) par rapport à la première pose (101) compte tenu du premier et du deuxième jeu de données de ciblage.

11. Procédé selon la revendication 10, dans lequel la première pose (101) et/ou la deuxième pose (102) sont une pose absolue référencée.

12. Procédé selon l'une quelconque des revendications 10 et 11, comprenant en outre les étapes suivantes :
- prise d'une deuxième image de l'environnement (2), l'instrument étant dans la deuxième pose (102),
- identification d'au moins une partie des éléments compris dans le premier jeu d'éléments (1, 312, 313) compte tenu d'une mise en correspondance des images, et calcul d'un deuxième niveau d'applicabilité pour les éléments du premier jeu d'éléments,
- choix du deuxième jeu d'éléments comprenant une pluralité d'éléments du premier jeu d'éléments (1, 312, 313), compte tenu du niveau d'applicabilité (32) et compte tenu en outre du deuxième niveau d'applicabilité.

13. Procédé selon l'une quelconque des revendications 10 à 12, dans lequel la mesure du deuxième jeu de données de ciblage précède la mesure du premier jeu de données de ciblage.

14. Procédé selon la revendication 13, dans lequel l'instrument est replacé sur une pluralité de poses, au moins deux poses de ladite pluralité de poses étant des poses référencées et au moins une pose de ladite pluralité de poses étant une pose non référencée, le procédé comprenant en outre :
- l'actualisation d'une pose de balisage de l'au moins une pose non référencée par pondération du deuxième jeu de données de ciblage déduit à l'égard des au moins deux poses référencées.

15. Produit-programme d'ordinateur pour un système de relevé qui, lorsqu'il est exécuté par une unité informatique (30) d'un instrument de relevé (40) selon l'une quelconque des revendications 1 à 9, déclenche l'exécution automatique des étapes du procédé selon l'une quelconque des revendications 10 à 14.
